Europäisches Patentamt

(19) European Patent Office

Office européen des brevets

(11) Publication number: **0 004 126**
A2

# EUROPEAN PATENT APPLICATION

(21) Application number: 79300104.1

(22) Date of filing: 22.01.79

(51) Int. Cl.²: **F 24 J 3/02**

(30) Priority: 11.03.78 GB 971978

(43) Date of publication of application:
19.09.79 Bulletin 79/19

(84) Designated contracting states:
DE FR IT NL SE

(71) Applicant: Kent, Graham Bruce
Goldtrieve House 54 Over Road
Almondsbury, Bristol BS12 4BW(GB)

(72) Inventor: Kent, Graham Bruce
Goldtrieve House 54 Over Road
Almondsbury, Bristol BS12 4BW(GB)

(74) Representative: Stephens, Michael John
M.J. Stephens & Co. Royal Building 11 St. Andrew's
Cross
Plymouth Devon PL1 2DS(GB)

(54) Solar energy collectors.

㊗ A solar heat collector panel is made up of an array of parallel extruded aluminium absorber elements (1) with internal longitudinal flow ducts (4) each element being extruded with integral lateral fins (5) of tapering thickness exposed on one face to solar radiation (12) and backed on the opposite face by thermally insulating material (9). The internal flow ducts may be interconnected by manifolds at opposite ends and heat exchange by fluid flowing through each duct is enhanced by internal longitudinal ribs (6) in the duct.

In a reversible version of the absorber element the entire element is rotatable about the longitudinal axis of the duct from a heat absorbing position in which a blackened face (16) is exposed to solar radiation through a transparent cover (17) to a re-radiating position in which the face re-radiates heat, for example into a horticultural enclosure. The cover is hinged and moves away from the exposed face as the element is rotated into its re-radiating position.

Fig.4.

EP 0 004 126 A2

Croydon Printing Company Ltd.

## SOLAR ENERGY COLLECTORS

This invention relates to solar energy collectors, and to solar energy absorbers for use in heat collecting panels for extracting useful heat from incident solar radiation.

Solar energy absorbing devices are known in which water or some other heat exchange fluid is circulated through passages in a heat exchanger associated with absorbers having surfaces exposed to incident sunlight. The use of finned elements in heat exchangers is well known. In general, however, the performance of existing solar heat absorbers is not as efficient as the heat transfer criteria of such absorbers would allow.

It is an object of the present invention to provide a novel finned radiant heat absorber which is specifically adapted to the efficient and economic absorption of solar radiant heat.

The operational efficiency of a solar heat absorber may be expressed as:

$$\text{Absorber efficiency } \eta = \frac{\text{heat gain}}{\text{heat input}}$$

$$= \frac{\Delta t.c}{IA}$$

0004126

where $\Delta t$ = rise in temperature of the absorber

C = thermal capacity of the absorber

I = radiation intensity

A = effective area of absorber exposed to radiation.

It will be apparent that for optimum efficiency consistent with maximising $\Delta t$, the thermal capacity C should be minimised. This enhances the transient performance. Thermal conduction through the absorber to a heat exchange fluid circulating therein should also be maintained as high as possible.

For the purpose of optimizing heat conduction through a finned absorber element it is known to provide the fins of such an element with a graded cross section increasing in thickness towards an internal fluid flow duct. An example of such an absorber element is illustrated in U.K. patent specification No.1492916.

The transient performance of such a radiant heat absorber becomes particularly important in conditions of use where the absorber is exposed to fluctuating solar radiation, as is common in many European and American climatic conditions. In order to minimize the thermal capacity C while

0004126

maintaining a high conductivity it is necessary to minimize both the mass of the absorber and the volume of heat exchange fluid therein. In order to optimize the heat transfer without introducing an undesirably high temperature gradient between the hottest parts of the absorber surface and the heat exchange fluid such heat transfer should take place with the minimum of heat transfer interfaces.

An object of the present invention is to provide a solar heat absorber element having optimum heat transfer characteristics between its faces exposed to solar radiation and a heat exchange fluid.

According to the present invention there is provided a solar energy absorber for use in a solar heat collecting panel, comprising an elongate extruded metal element formed with a longitudinally extending internal duct and two external lateral fins extending longitudinally on opposite sides of the duct, the fins tapering in thickness from the portions thereof adjacent the duct, characterised in that the internal duct is formed with a number of longitudinally extending ribs projecting into said duct to enhance the the surface area of contact between the walls of the duct and a heat exchange fluid which flows through the duct in use of the absorber, the absorber element being adapted to absorb heat upon exposure of one face to solar radiation. Preferably the face of the absorber element opposite said one face cooperates with thermally insulating backing material.

The provision of external lateral fins of tapering thickness allied to the internally ribbed fluid flow duct leads to efficient transfer of heat by conduction across the width of the fins to fluid in the internal duct, with minimal temperature gradient and heat loss. Moreover, since the fins and the ribs are longitudinally extending the collector can be manufactured economically by extrusion in one piece, for example in aluminium or aluminium alloy,

Preferably the two fins have outer free edges disposed in a common plane spaced from the axis of the longitudinally extending duct, the median lines of the cross sections of the fins being convexly curved towards the exposed faces of the fins and being inclined to each other at an obtuse angle at the roots of the fins. Each

- 5 -

0004126

fin therefore preferably has in cross section a "gull wing" configuration with convexly curved surfaces which are exposed to radiation in use of the absorber.

A solar heat collecting panel such as a roof mounted solar panel may be made from a number of absorber elements as aforesaid. The present invention accordingly also provides a solar radiation absorbing panel having an internal enclosure in which a number of elongate absorber elements are mounted side-by-side, each absorber element having a longitudinally extending internal duct and two external lateral fins extending longitudinally on opposite sides of the duct, the fins of each element tapering in thickness to their outer free edges which are parallel to and coplanar with the outer edges of the fins of the other absorber elements, manifolds interconnecting the internal ducts of the absorber elements at opposite respective ends thereof, and a glazing element covering the enclosure through which one face of each absorber element is exposed, characterised in that backing means of thermally insulating material cooperates with the face of the absorber element opposite the exposed face thereof, and further characterised in that the internal ducts of the absorber elements communicate with the manifolds through hollow connector spigots which have sliding seal connections with opposite ends of the absorber element ducts. The absorber elements are preferably arranged with the longitudinal axis of their ducts coplanar. and located behind the outer edges of the fins with respect to the direction of incident radiation.

By manufacturing the solar radiation absorber elements themselves, and the components of the enclosure, from aluminum or aluminum alloy extrusions it is possible to assemble the panel easily and economically from a small number of component parts.

A further object of the invention is to provide a solar energy absorber which is reversible, that is, an absorber which is capable of absorbing thermal energy from solar radiation in one operating mode, and which is capable of re-radiating stored thermal energy in another operating mode.

According therefore to a further aspect of the present invention there is provided a reversible solar energy absorber element of thermally conductive material having an internal flow duct through which a heat transfer fluid may be passed for conveying heat to or from the element and an exposed face adapted for the absorption and radiation of heat, characterised in that the absorber element which is preferably backed by a layer of thermally insulating material, is movable selectively between an absorbing position in which the exposed face absorbs solar radiation and a re-radiating position in which the said face re-radiates heat stored in the element.

The reversible solar energy absorber element of the present invention finds practical application in the solar heating of enclosures such as greenhouses in which the solar heat available during the day is in excess of the heating requirements, while at night the heat loss from the enclosure is such as to require some form of heating in the enclosure. When used in such a situation the reversible solar energy absorber element of this invention can be arranged by day in its absorbing position while at night the element is rotated into its re-radiating position.

As applied to a horticultural growing enclosure such as a greenhouse the reversible solar energy absorbers may be embodied in a solar energy absorbing canopy structure comprising a number of the elements spaced apart laterally, the spacing between the elements determining the amount of direct solar radiation reaching plants in the enclosure in daylight conditions.

Preferably the individual absorber elements are elongate and the internal flow duct communicates at opposite ends of the element with tubular connector pipes which are rotatable in respective bearings to enable the element to be selectively positioned by rotation about a longitudinal axis. Preferably the absorber element includes a radiation transmitting cover which is movable relative to the element and which covers the said exposed face of the element when the latter is in its radiation absorbing position. Thus in the preferred form of absorber element the radiation transmitting cover may be hinged along one longitudinal edge of the element.

The invention will be further described, by way of example, with reference to the accompanying drawings, in which:

Figure 1 is a diagrammatic perspective view of a solar heat collecting panel according to one embodiment of the invention;

Figure 2 is a diagrammatic transverse cross section through part of a solar heat collecting panel incorporating absorber elements according to one embodiment of the invention;

Figure 3 is a diagrammatic longitudinal cross section through part of the solar heat collecting panel shown in Figure 2;

Figure 4 is a transverse cross section of a solar energy absorber element according to another embodiment of the invention, shown in a heat absorbing position;

Figure 5 is a transverse cross section of the element of Figure 4, shown in a position for re-radiating stored thermal energy, and

Figure 6 is a schematic transverse cross section of part of a solar energy absorbing canopy structure employing reversible absorber elements of the kind shown in Figures 4 and 5.

The same reference numerals are used throughout to designate corresponding components of the different illustrated embodiments of the invention.

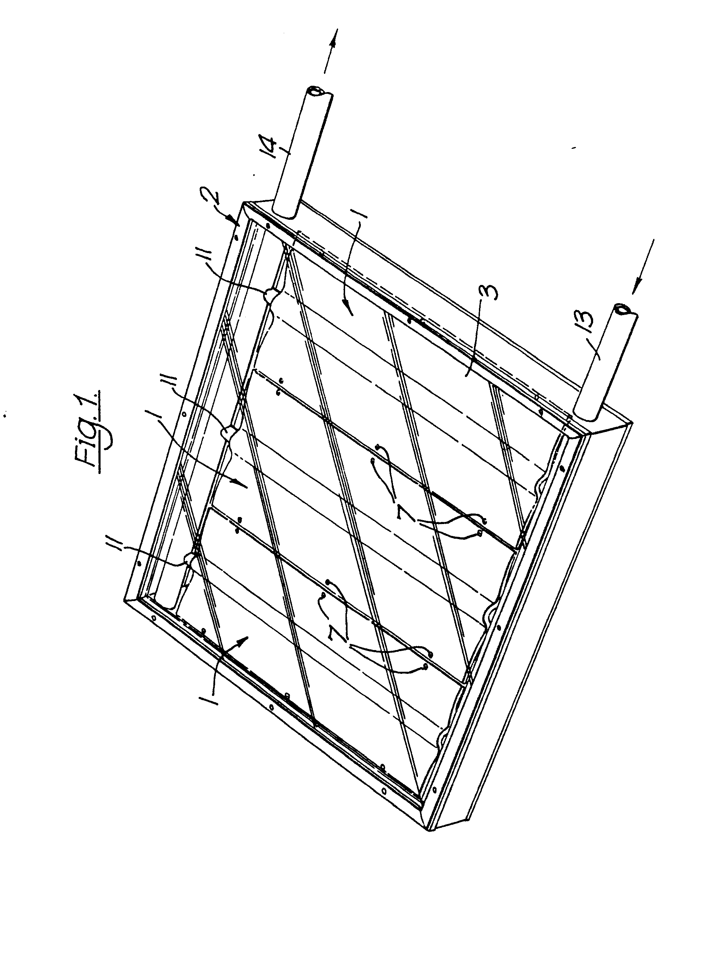

Figures 1 to 3 illustrate a solar heat collecting panel adapted to be mounted on the roof of a building and comprising a number of (in the illustrated example, three) extruded aluminum or aluminum alloy radiation absorber elements 1 mounted in an enclosure 2 formed by extruded aluminum frame sections and covered on its upper surface by a glazing member 3.

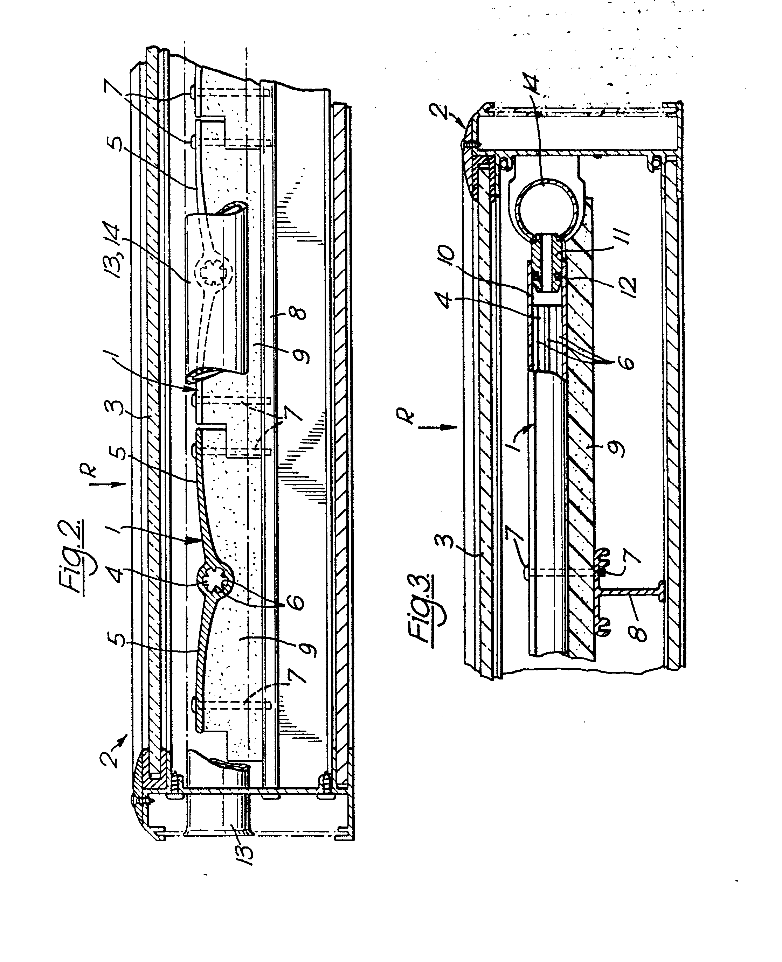

Each solar radiation absorber element 1 comprises an elongate element extruded with a longiturally extending internal duct 4 (Figure 2) and two external lateral fins 5 extending longitudinally on opposite sides of the duct. Each fin tapers in thickness from the root portion adjacent the duct to its outer edge. It will be seen from Figure 2 that the outer edges of the two fins 5 of each absorber element 1 are disposed in a common plane spaced from and disposed in front of the axis of the longitudinally extending duct 4 with respect to the direction of incident solar radiation, indicated by arrows R in Figures 2 and 3. Furthermore, the median lines of the cross sections of the fins 5 are curved, the convex surfaces of the fins 5 facing in the direction of incident radiation R, and these median lines are inclined to each other at an obtuse angle, in this example about $160°$ at the roots of the fins 5.

Each solar radiation absorber element 1 is extruded with an internal duct 4 of non-circular cross section to give a high surface area of the duct 4 relative to its cross sectional area. In the illustrated example the duct 4 is extruded with a number of longitudinally extending inwardly projecting ribs 6.

The solar radiation absorber elements 1 are assembled in the panel side-by-side with the outer edges of the fins 5 of the neighbouring elements 1 parallel to each other and separated by a narrow gap sufficient to allow for manufacturing tolerances and thermal expansion of the elements in use. The outer edges of the fins 5 of the elements 1 are coplanar and lie in a plane disposed above the plane containing the longitudinal axis of the internal duct 4 of the absorber elements 1.

The absorber elements 1 may be supported within the enclosure by mountings 7, preferably of insulating material such as plastics, which engage T-section cross members 8 extending transversely across the bottom of the enclosure (Figure 3). The absorber elements 1 have a backing 9 of thermally insulating material such as polyurethane foam interposed between the individual elements 1 and the supporting cross members 8.

Prior to assembly of the absorber elements 1 in the collector panel the ribs 6 of the internal duct 4 of each absorber element 1 are drilled out at each end of the duct 4 for a short length defining a smooth-bored cylindrical end section 10 (Figure 3) into which a connector spigot 11 is inserted. The connector spigot 11 has an external resilient O-ring 12 which forms a sliding seal with the smooth bored end section 10. The connector spigots 11 have internal through bores which establish communication between the respective ducts 4 and transversely extending stainless steel manifolds 13, 14 into which the respective spigots 11 are force-fitted to make fluid tight connections therewith. The sliding seal connections between the absorber elements 1 and the manifolds 13, 14 permit expansion and contraction of the collector elements without imposing undesirable strain on the assembly as a whole. The spigots 11 may alternatively be welded, screwed or otherwise connected to the manifolds 13, 14.

The manifolds 13 and 14 are connected to respective inlets and outlets for a heat exchange fluid which, in use of the solar heat absorbing panel, is circulated through the ducts 4 of the absorber elements *via* the manifold 13, the spigots 11, and the manifold 14. In flowing through the internal ducts 4 of the absorber elements 1 the fluid which may be water with corrosion-inhibiting additives or other special heat transfer fluid, picks up heat which has been transferred by conduction to the walls of the ducts 4 from the fins 5.

To enhance the radiation absorbing efficiency of the fins 5 the exposed surfaces of the latter may be suitably coated, and are preferably selectively blackened to enhance their heat absorption/emission ratio.

The graded profile of the fins 5 of each heat absorber element 1 ensures a low temperature gradient across the width of each fin 5 in use of the heat collecting panel, with a minimum mass of metal consistent with sufficient mechanical strength and feasibility of extrusion. This in turn ensures a minimum thermal capacity of the absorber element while maximising the heat transfer from the fins to the internal duct of the absorber element.

The inlet and outlet manifolds 13, 14 are generally connected in a closed circulation system (not shown) for the heat exchange fluid including a pump and an external heat exchanger. The heat exchanger may be located within a heat storage vessel such as a water tank. The circulation pump is driven by an electric motor (not shown) which is controlled by a differential electronic temperature control switch responsive to the difference between the temperatures sensed at the exposed surfaces of the heat absorber elements 1 and at the thermal storage vessel to switch on the circulation pump when the temperature of the absorber elements is greater than that of the fluid in the heat exchanger or the thermal storage vessel. The system accordingly shuts down automatically at night, or in the absence of sufficient incident solar radiation.

In an alternative embodiment of the invention, not shown, the internal ducts 4 of the solar radiation asborber elements 1 may constitute evaporator sections of respective heat pipes the condenser sections of which are located in an external heat exchanger, each heat pipe having sealed within it a quantity of a suitable liquid of low boiling point which is evaporated by the solar heat collected at the absorber elements 1 and condensed at the external heat exchanger to impart heat thereto.

In some practical applications of the invention the solar heat collecting panel may include or be in heat exchange relationship with the evaporator of a heat pump. Such an arrangement yields heat at a higher temperature than the temperature of circulating refrigerant in the evaporator and, therefore, at a higher temperature than the solar panel itself.

The low volume of fluid contained in the internal ducts of the panel according to the invention, compared with that contained in most solar panels, and the internal ribs 6 of the panel elements, ensure a rapid transient response of the panel, for example when exposed to a brief burst of solar radiation.

For some practical applications, such as, for example, the heating of swimming pools, where a large quantity of water is to be heated at a relatively low temperature, the solar radiation absorber elements according to the invention may be exposed directly to solar radiation without the necessity for a surrounding enclosure or for a radiation transmitting glazing element.

The extruded aluminum absorber elements 1 have sufficient strength and rigidity to form part of the structure of the roof or roof cladding of a building, so that they are ideally suited for the incorporation of a solar heat collecting facility in a building under construction, apart from their use in a solar heat collecting panel for installation on an existing roof or wall of a building. The relatively slim cross sectional thickness of the solar radiation absorber elements makes them compatible with contemporary roofing materials and avoids the unsightly appearance commonly associated with many types of solar panel.

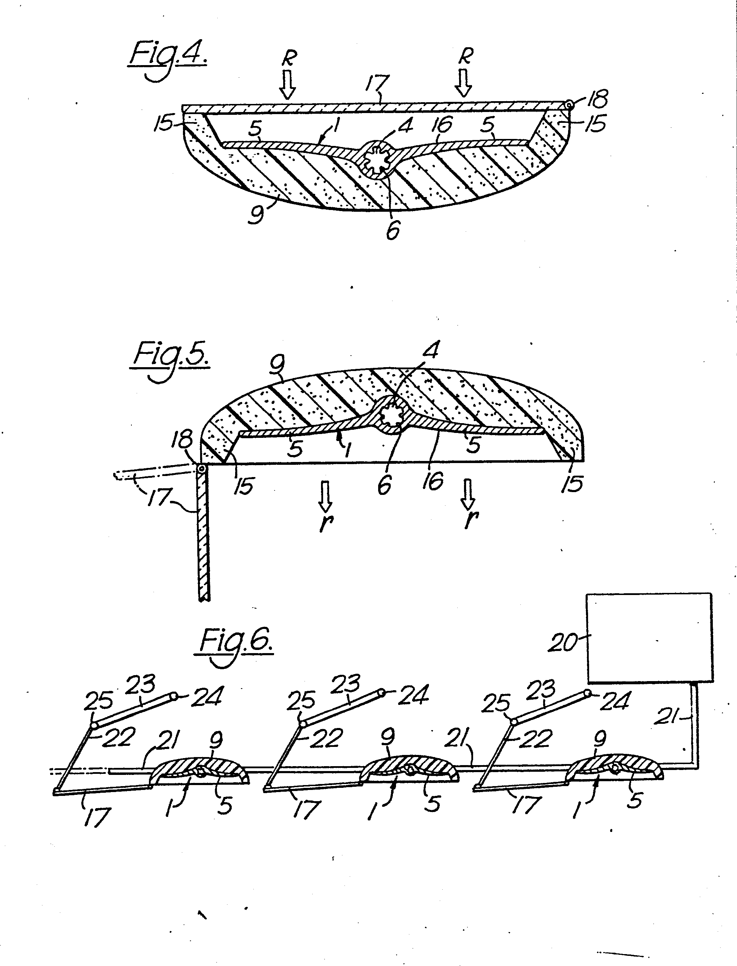

Referring to Figures 4 and 5, there is shown in cross section a reversible solar energy absorber element 1 according to another embodiment of the invention. The absorber element 1 is extruded in aluminum or aluminum alloy and is covered on one face by a layer 9 of thermally insulating material such as rigid plastics foam, for example polyurethane. The thermally insulating layer 9 extends beyond the longitudinal edges of the conductive element 1 to form two upstanding longitudinal edge walls 15. The conductive element 1 has an exposed face 16, finished matt black, which lies in a shallow well defined between the side walls 15.

The conductive element 1 comprises a single aluminum extrusion with a central longitudinally extending internal flow duct 4 formed with longitudinally extending inwardly projecting ribs 6. The element 1 has essentially the same configuation as the element 1 shown in Figures 1 to 3, having two integral fins 5 tapering in thickness to their longitudinal free edges.

An elongate flat glass or transparent plastics cover plate 17 is hinged about a hinge 18 at one longitudinal edge of the plate 17 to one of the longitudinal walls 15 formed in the insulating layer 9.

The internal longitudinal flow duct 4 communicates at opposite ends with tubular connector pipes (not shown) which are rotatable in respective seals to enable the entire absorber element 1 to be rotated about the longitudinal axis of the duct 4. These connector pipes may be similar to the spigots 11 shown in Figures 1 to 3.

The absorber element 1 of Figures 4 to 6 is designed to be mounted above plants under cultivation, for example in a greenhouse or other growing enclosure.

The element 1 is rotatable between two positions, shown respectively in Figures 4 and 5. In the heat absorbing position, Figure 4, the element 1 is arranged with the exposed face 16 uppermost, so that it is exposed to solar radiation, indicated by arrows R, impinging upon the face 16 through the glass cover plate 17. The absorption of heat by the element 1 in this position is enhanced by the matt black surface coating of the face 16, heat loss by re-radiation from the face 16 being minimised by the glass cover plate 17, which is relatively opaque to long wavelength radiation emitted by the heated element 1 this is the well known "greenhouse effect". The thermally insulating layer 9 serves to minimise radiative and convective heat loss from the back of the element 1.

Heat imparted by solar energy to the element 1 is transferred to fluid, in this example water, flowing through the internal duct 4, such heat transfer being enhanced by the presence of the radially inwardly projecting longitudinal ribs 6.

The fluid is conveyed, generally by means of a pump (not shown) to a lagged storage tank (not shown) which acts as a heat reservoir.

When the ambient radiation falls below a level at which heat can usually by extracted by the element, for example at night or in heavily overcast conditions, the element may be rotated about the axis of the duct 4 to the re-radiating position shown in Figure 5, in which the insulating layer 9 is uppermost, and the exposed face 16 of the element 1 faces downwardly, for example towards the plants under cultivation. In this position radiant heat is dissipated by the element 1, as indicated diagrammatically ·by arrows $r$, and heat may be supplied to the element 2 by fluid at super-ambient temperature passing through the internal duct 4 from the heat storage tank.

Since the exposed face 16 of the element 1 in the re-radiating position of Figure 5 is at a relatively low temperature, not many degrees above ambient temperature, the thermal radiation $r$ emitted thereby will be predominantly in the long wavelength region and the glass cover plate 17 which is opaque to such radiation, should therefore be removed. With the arrangement illustrated, the glass cover plate 17 automatically swings under its own weight into a
vertical position, shown in Figure 5, as the
element 1 is rotated about its longitudinal
axis in an anti-clockwise direction from the
position shown in Figure 4 to that shown in
Figure 5.

The solar energy absorber element 1 shown
in Figures 4 and 5 may conveniently be embodied
in a canopy structure, part of which is shown
diagrammatically in Figure 6, arranged to cover
cultivated ground, or arranged over growing plants
in an enclosure such as a greenhouse. Such a
canopy structure is made up of a number of
reversible absorber elements 1 arranged with
their longitudinal axis of rotation parallel to
each other and orientated in a horizontal plane,
or in a plane inclined to suit the solar altitude,
the elements 1 being spaced apart at regular
intervals by a spacing which determines the amount
of direct solar radiation reaching the cultivated
ground.

In conditions of direct sunlight, where the
incident solar radiation may be surplus to that
required by the growing plants, the absorber elements 1 will be orientated in the heat collecting position shown in Figure 4, so that the solar radiation impinging upon the faces 16 of the elements 1 is absorbed and transferred to fluid circulating through the internal ducts 4 of the elements 1 to a thermally insulated storage vessel 20, shown diagrammatically. The connection of the individual ducts 4 to the storage vessel 20 is by way of static header pipes 21, also shown diagrammatically, running transversely along the entire extent of the array of absorber elements 1, the opposite ends of the ducts 4 having leak-free joints to the respective header pipes 21.

At night, or when the ambient solar radiation level falls, the absorber elements 1 are rotated to the re-radiating positions Figure 5), in which the exposed faces 16 of the elements 1 face downwardly and re-radiate thermal radiation to the growing plants. Heated fluid is supplied to the internal ducts 4 of the re-radiating elements 1 from the storage vessel 20 through the header pipes 21. If necessary, additional heat may be supplied to the water circulating through the ducts 4 by, for example, incorporating supplementary heating means in the storage vessel 20.

Although the glass cover plates 17 of the absorber elements 1 may hang vertically in the re-radiating positions (Figure 5), in the arrangement illustrated in Figure 6 an alternative is shown in which the glass cover plates 17 are held in a substantially horizontal position to one side of the associated absorber element 1 when the latter is in its re-radiating position. This positioning of the cover plates 17 increases the angle of radiation radiated by the element 1, and also serves to close, at least partly, the gaps between adjacent elements 1. In these positions, the glass cover plates 17 reduce convection losses to the roof space of the growing enclosure. Such positioning of the cover plates 17 may be effected, for example, by flexible links 22 connecting the free edges of the cover plates 17 to anchor points 25.

Intermediate positions of the glass cover plates 17 between the horizontal positions shown in Figure 6 and the vertical position shown in Figure 5 may be adopted where controlled ventilation of the growing enclosure is required.

Such intermediate positioning of the glass cover plates 17 may be effected by any convenient means, for example by means of crank arms 23 mounted upon respective crank shafts 24 extending parallel to the axis of rotation of the elements 1 for causing intermediate positioning of the anchor points 25. With such an arrangement, the positions of the glass cover plates 17 are controlled principally by the orientation of the associated absorber elements 1 via the links 22 and can be controlled for said intermediate positions by means of the crank shafts 24.

For some purposes, and under certain weather conditions, it may be desirable to maximise the amount of direct sunlight reaching the ground. For this purpose the individual absorber elements 1 may be positioned with orientations intermediate those illustrated in Figures 4 and 5, with their exposed faces 16 substantially vertical, or aligned with the direction of incident solar radiation, so that the absorber elements 1 present a minimum obstruction to the solar radiation.

For convenience of control and operation all the collector elements 1, or groups of absorber elements 1, making up a canopy structure such as that illustrated in Figure 6 may be ganged together for operation in unison. Alternatively, each element 1 may be controllable individually, as illustrated, so that the elements 1 can be orientated selectively according to the prevailing weather and the desired growing conditions.

The rotation of the absorber elements 1 may be effected automatically, either in response to a solar radiation sensor, a temperature sensor. or by means of a timer, For example, the or each absorber element 1 may be rotated automatically from its collecting position into its re-radiating position at dusk in each 24-hour period, and returned to its heat absorbing position at dawn.

Individual absorber elements 1 as illustrated in Figures 4 to 6 may be embodied in roof ventilators of growing enclosures, for example as part of a louvre ventilation system. Such an arrangement of absorber elements according to the invention can, furthermore, be employed in other structures besides horticultural enclosures. For example, the absorber elements may find useful application in factory spaces or office buildings where the available sunlight under bright sun conditions is in excess of heating requirements. In this case the absorber elements could be employed as effective shuttering for the controlled admission of sunlight, and embodied in a louvre structure or a controllable blind structure analogous to a venetian blind.

When the absorber elements are used in factory or office buildings as absorbers or re-radiators of solar energy, the absorber elements may be mounted with their longitudinal axes substantially vertical. In this case the pivotal movement of the hinged cover plates 17 may be effected by rotating the collector elements 1 while constraining the locus of the free edges of the cover plates 17 to a straight line, so that the effect of rotating the absorber elements is similar to that achieved with gravity assistance in the arrangement illustrated in Figure 6.

In the example illustrated in Figures 4 to 6 the absorber elements 1 are arranged with their longitudinal axes horizontal, for convenience of illustration. It will be appreciated, however, that in practice the precise orientation of the absorber elements would be chosen with reference to the mean solar altitude relative to the site at which the elements are located so as to optimise the amount of solar radiation impinging upon the elements in their heat absorbing positions.

- 1 -

CLAIMS

1.  A solar energy absorber for use in a solar heat collecting panel, comprising an elongate extruded metal absorber element (1) formed with a longitudinally extending internal duct (4) and two external lateral fins (5) extending longitudinally on opposite sides of the duct, the fins tapering in thickness from the portions thereof adjacent the duct,
characterised in that
the internal duct (4) is formed with a number of longitudinally extending ribs (6) projecting into said duct to enhance the surface area of contact between the walls of the duct and a heat exchange fluid which flows through the duct in use of the absorber, the absorber element being adapted to absorb heat upon exposure of one face (5) to solar radiation.

2.  An energy absorber as claimed in Claim 1, wherein the face of the absorber element opposite said one face cooperates with thermally insulating backing material (9).

3. A solar energy absorbing panel having an internal enclosure in which a number of elongate absorber elements (1) are mounted side-by-side, each absorber element having a longitudinally extending internal duct (4) and two external lateral fins (5) extending longitudinally on opposite sides of the duct, the fins of each element tapering in thickness to their outer free edges which are parallel to and coplanar with the outer edges of the fins of the other absorber elements, manifolds (13, 14) interconnecting the internal ducts of the absorber elements at opposite respective ends thereof, and a glazing element (3) covering the enclosure through which one face of each absorber element is exposed,

characterised in that backing means (9) of thermally insulating material co-operate with the face of the absorber element opposite the exposed face thereof, and further characterised in that the internal ducts (4) of the absorber elements communicate with the manifolds through hollow connector spigots (11) which have sliding seal connections with opposite ends of the collector element ducts.

4. A solar radiation absorbing panel as defined in Claim 3,
characterised in that
each connector spigot (11) is inserted into a cylindrical end portion (10) of the internal duct of the associated absorber element (1) and carries a sealing element (12) which makes sealing sliding contact with said cylindrical end portion.

5. A reversible solar energy absorber element (1) of thermally conductive material having an internal flow duct (4) through which a heat transfer fluid may be passed for conveying heat to or from the element and an exposed face (16) adapted for the absorption and radiation of heat
characterised in that the absorber element is backed by a layer of thermally insulating material (9) and the element is movable selectively between an absorbing position (Figure 4) in which the exposed face (16) absorbs solar radiation and a re-radiating position (Figure 5) in which the said face (16) re-radiates heat stored in the element.

6. An absorber element as claimed in Claim 5 which is elongate and in which the internal flow duct (4) communicates at opposite ends of the element (1) with tubular connector pipes which are rotatable in respective bearings to enable the elemeht to be selectively positioned by rotation about a longitudinal axis.

7. An absorber element as claimed in Claim 5 or Claim 6, in which the internal duct (4) is bounded by internal longitudinally extending ribs (6) to enhance heat transfer between the conductive element and the heat transfer fluid.

8. An absorber element as claimed in any one of Claims 5 to 7, including a light transmitting cover (17) which is movable relative to  the element

0004126

and which covers the said exposed face (16) of the element when the latter is in its radiation collecting position.

9. An absorber element as claimed in Claim 8, in which the light transmitting cover (17) is hinged (18) along one longitudinal edge to the element (1).

10. An absorber element as claimed in Claim 9, arranged with its longitudinal axis substantially horizontal so that the cover (17) rotates about its hinge (18) relative to the conductive member upon rotation of the element about said longitudinal axis so as to cover the said exposed face (16) when the element (1) is in its absorbing position and to open away from the said face (16) when the element (1) is in its re-radiating position.

11. An absorber element as claimed in Claim 9, arranged with its longitudinal axis substantially vertical and with the locus of the free edge of the cover (17) constrained so that rotation of the absorber element (1) about said longitudinal axis effects closing or opening of the cover relative to the element (1)

12. A solar energy absorbing canopy structure for a horticultural growing enclosure comprising a number of reversible absorber elements (1) according to any one of Claims 5 to 11, supported with the individual absorber elements spaced apart laterally when their exposed faces (16) are exposed to solar radiation, the spacing between the elements (1) and their orientation determining the amount of direct solar radiation reaching plants in the enclosure.

## Fig.1.

Fig.2.

Fig.3.

0004126

**Fig.4.**

R    R

17    18

15    15
5    1    4    16    5
9    6

**Fig.5.**

9    4

18    5    1    6    16    5

17    15    r    r    15

**Fig.6.**

20

25  23  24    25  23  24    25  23  24
22  21  9    22  21  9    22  21    21
17  1  5    17  1  5    17  1  5